# FASCICULE DE BREVET EUROPEEN

(11) **EP 2 818 036 B1**
(45) Date de publication et mention de la délivrance du brevet: **25.05.2016**
(21) Numéro de dépôt: 14172052.4
(22) Date de dépôt: 12.06.2014
(51) Int. Cl.: A01D 78/10, A01D 34/00

(54) **Machine de récolte**
Erntemaschine
Harvesting machine

(30) Priorité: 25.06.2013 FR 1356029
(43) Date de publication de la demande: 31.12.2014
(73) Titulaire: KUHN S.A., 67700 Saverne (FR)
(72) Inventeur: Schott, Mathieu, 67310 COSSWILLER (FR); Marx, Damien, 67700 SAVERNE (FR)

(56) Documents cités:
- EP-A1- 2 022 316
- EP-A1- 2 022 317
- EP-A1- 2 253 186
- DE-A1-102005 035 570

## Description

La présente invention se rapporte à une machine agricole pour la récolte de fourrage, déplaçable dans une direction d'avancement et comportant un châssis auquel est articulé au moins un bras portant au moins un outil de travail, ce bras comportant au moins une première partie articulée directement ou indirectement au châssis, et une deuxième partie reliée de manière mobile à la première partie et portant l'outil de travail, la machine comportant également au moins un premier dispositif d'actionnement relié à la première partie et un deuxième dispositif d'actionnement relié à la deuxième partie, au moins l'un de ces premier et deuxième dispositifs d'actionnement étant piloté pour régler une distance mesurée transversalement à la direction d'avancement et de laquelle l'outil de travail s'étend latéralement par rapport au châssis, entre une valeur minimale et une valeur maximale, au moins l'autre de ces premier et deuxième dispositifs d'actionnement étant piloté pour déplacer verticalement l'outil de travail entre au moins une position de travail et au moins une position relevée dans laquelle l'outil de travail s'étend à une certaine hauteur au-dessus du sol, la machine comportant des moyens d'asservissement en position de l'un au moins de ces premier et deuxième dispositifs d'actionnement à une consigne de réglage qui détermine une hauteur cible de l'outil de travail par rapport au sol.

Une machine de ce type est commercialisée par le déposant. Cette machine est une andaineuse de végétaux étalés au sol, comportant deux rotors situés chacun d'un côté du châssis de la machine. Chaque rotor est monté sur un axe de rotation sensiblement vertical pendant le travail, lequel axe de rotation est porté par un bras télescopique. Ce bras comporte une première partie articulée au châssis au moyen d'un axe de pivotement horizontal orienté dans la direction d'avancement. Un premier vérin est articulé entre le châssis et cette première partie du bras de manière à déplacer verticalement le rotor entre une position de travail, une position relevée utilisée pour passer au-dessus d'andains déjà formés ou d'obstacles, et une position de transport dans laquelle l'axe de rotation du rotor est sensiblement horizontal. La deuxième partie du bras peut coulisser au sein de la première partie du bras, ce coulissement est opéré par un deuxième vérin articulé entre lesdites parties du bras. Grâce à cette liaison coulissante, la distance, séparant l'axe de rotation du rotor de l'axe de pivotement de la première partie du bras, est réglable entre une valeur minimale et une valeur maximale. De la sorte, la largeur de travail obtenue avec les rotors peut être modifiée, notamment en fonction de la capacité de traitement de la presse ou de l'ensileuse utilisée pour ramasser l'andain. Sur cette machine connue, chaque rotor est déplacé vers la position relevée par pivotement du bras d'un certain angle. Cet angle est déterminé par la course de déplacement du premier vérin correspondant qui est piloté par des moyens d'asservissement en position. Ces moyens d'asservissement comportent une vanne fixée sur le châssis, un levier qui pilote l'ouverture et la fermeture de la vanne, et un moyen de réglage qui lie le levier à la première partie du bras. Ce moyen de réglage est formé par un trou oblong pratiqué dans la première partie du bras, au sein duquel le levier peut être déplacé et serré dans différentes positions. Chaque position du levier au sein du trou oblong forme une consigne de réglage qui détermine une hauteur cible du rotor par rapport au sol. En effet, chacune de ces positions définit un angle de pivotement duquel la première partie du bras pivote lorsque le rotor est relevé du sol, auquel angle le levier commande la vanne à la fermeture de façon à stopper le déplacement du premier vérin et donc à immobiliser la première partie du bras audit angle de pivotement. Un inconvénient de ces moyens d'asservissement est que chaque consigne de réglage détermine une hauteur cible du rotor qui varie, en particulier augmente, avec la distance séparant l'axe de rotation du rotor de l'axe de pivotement de la première partie du bras. En effet, la liaison coulissante, sensiblement horizontale au travail, est inclinée vers le haut et vers l'extérieur par rapport au châssis lorsque le rotor est relevé. Par conséquent, si la consigne de réglage détermine une hauteur cible minimale, le rotor peut être relevé du sol d'une amplitude suffisante lorsque la largeur de travail est réglée au maximum, mais en revanche, cette amplitude risque fort d'être insuffisante lorsque la largeur de travail est minimale. En pareil cas, le rotor relevé risque de défaire des andains déjà formés ou de heurter un obstacle. Dans le cas inverse d'une consigne de réglage donnant une hauteur cible maximale, le dégagement vertical du rotor placé à la distance maximale du châssis, risque fort d'excéder largement celui requis pour passer au-dessus des andains formés ou des obstacles généralement rencontrés au champ. Dans cette configuration relevée des rotors, le centre de gravité particulièrement haut de la machine déstabilise aisément cette dernière si le terrain est irrégulier ou la vitesse d'avancement trop importante. Les moyens d'asservissement de la machine connue ne permettent donc pas d'obtenir un relevage optimal des rotors pour les différentes largeurs de travail réglées et pour les diverses situations rencontrées pendant le travail et lors des manoeuvres.

Le document EP 2 253 186 A1 décrit une machine conforme au préambule de la revendication 1, dont l'outil de travail est constitué par un rotor de râtelage des végétaux au sol. Cette machine ne comporte cependant qu'une seule position transversale de travail de l'outil de travail par rapport au châssis. Par conséquent, cette machine présente une adaptation limitée à des situations de travail différentes, car sa largeur de travail totale ainsi que la largeur de l'andain formé à partir des végétaux râtelés, sont fixes.

La présente invention a pour but de proposer une machine agricole pour la récolte de fourrage qui ne présente pas les inconvénients précités.

A cet effet, une importante caractéristique de l'invention consiste en ce que les moyens d'asservissement sont configurés pour relever l'outil de travail à une hauteur du sol sensiblement égale à la hauteur cible, depuis au moins deux positions transversales de travail de l'outil de travail situées à une distance du châssis comprise entre les valeurs minimale et maximale.

Lorsque l'outil de travail est déplacé d'une position de travail initiale vers une position relevée, au moyen de l'un au moins des premier et deuxième dispositifs d'actionnement, les moyens d'asservissement font en sorte qu'il se trouve à une hauteur du sol sensiblement égale à la hauteur cible, et ce, que l'outil de travail se trouve initialement dans une première position transversale de travail, par exemple celle correspondant à la largeur de travail minimale, ou bien dans une deuxième position transversale de travail, par exemple celle associée à la largeur de travail maximale. La consigne de réglage étant par exemple définie pour que la hauteur de relevage de l'outil de travail soit toujours suffisante pour passer au-dessus d'andains formés ou d'obstacles, notamment lorsque l'outil de travail est placé à une distance du châssis voisine de la valeur minimale, les moyens d'asservissement sont alors en mesure d'éviter que l'outil de travail soit excessivement relevé au-dessus du sol, notamment lorsque l'outil de travail est placé à une distance du châssis voisine de la valeur maximale. Ainsi, dans la position relevée de l'outil de travail, la machine selon l'invention présente une stabilité satisfaisante en même temps que la garde au sol de l'outil de travail est suffisante.

Selon une caractéristique avantageuse de l'invention, les moyens d'asservissement sont configurés pour relever l'outil de travail à une hauteur du sol sensiblement égale à la hauteur cible, depuis toute position transversale de travail de l'outil de travail située à une distance du châssis comprise entre les valeurs minimale et maximale. Ainsi, que l'outil de travail se trouve initialement dans une première position transversale de travail correspondant à la largeur de travail minimale, ou bien dans une deuxième position transversale de travail associée à la largeur de travail maximale, ou encore quelle que soit la largeur de travail réglée initialement, l'outil de travail est toujours relevé à une hauteur du sol sensiblement égale à la hauteur cible. Cette dernière est alors avantageusement déterminée ou réglée pour garantir, en toutes circonstances, à la fois un dégagement suffisant de l'outil de travail au-dessus du sol, et un centre de gravité placé à une hauteur raisonnable pour conserver une bonne stabilité.

Selon une autre caractéristique avantageuse de l'invention, les moyens d'asservissement comportent un moyen de réglage permettant d'ajuster la consigne de réglage. Ce moyen de réglage permet à l'utilisateur d'intervenir facilement sur les mouvements des outils de récolte en vue d'adapter sa machine aux différentes situations rencontrées pendant le travail ou lors des manoeuvres.

D'autres caractéristiques et avantages de l'invention ressortiront de la description ci-après avec référence aux dessins annexés qui représentent une forme non limitative de réalisation de la machine selon l'invention.

Sur ces dessins :
- la figure 1 représente une vue en perspective d'une forme de réalisation d'une machine selon l'invention ;
- la figure 2 représente une vue partielle de face d'une première variante de réalisation de la machine de la figure 1 ;
- la figure 3 représente une vue partielle de face d'une deuxième variante de réalisation de la machine de la figure 1.

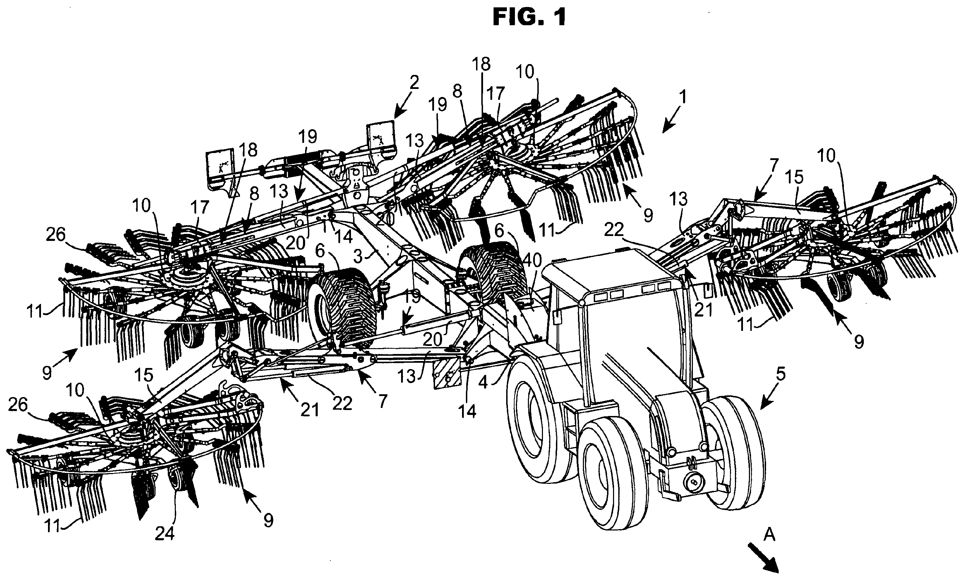

Telle qu'elle est représentée sur la figure 1, la machine (1) selon l'invention comporte un châssis (2) comprenant une poutre centrale (3) qui possède à son extrémité avant un dispositif d'attelage (4) pour l'accrocher à un tracteur (5) permettant de déplacer la machine (1) dans une direction d'avancement (A). Dans la suite de la description, les notions « avant » et « arrière » sont définies par rapport à la direction d'avancement (A), tandis que les notions « haut », « dessus », « inférieur » et « supérieur » se rapportent au sol.

Dans la forme de réalisation représentée à la figure 1, le châssis (2) est supporté directement au sol par des roues (6). Ces roues (6) sont montées sur un essieu lui-même relié à la poutre centrale (3). Au châssis (2) est articulé au moins un bras (7, 8) portant au moins un outil de travail (9). Dans cette forme de réalisation, l'outil de travail (9) comporte un rotor (10) avec des outils (11), tels que des fourches, destinés à déplacer des produits tels que de l'herbe ou de la paille fauchée se trouvant sur le sol. Le rotor (10) peut tourner autour d'un axe de rotation (12) qui est sensiblement vertical pendant le travail. Dans cette forme de réalisation, la machine (1) comporte une première paire d'outils de travail (9) placés en avant des roues (6) et répartis de chaque côté respectif de la poutre centrale (3), ainsi qu'une deuxième paire d'outils de travail (9) placés en arrière des roues (6) et répartis de chaque côté respectif de la poutre centrale (3).

Chaque outil de travail (9) est porté par un bras (7, 8) respectif. De chaque côté de la poutre centrale (3) du châssis (2), les bras (7 et 8) ont des longueurs différentes. De cette manière, les rotors (10) placés à l'avant sont plus éloignés de la poutre centrale (3) que les rotors (10) arrière. Les végétaux andainés par le rotor (10) placé le plus en avant sur un côté de la poutre centrale (3) peuvent ainsi être repris par le rotor (10) disposé le plus en arrière du même côté de la poutre centrale (3) pour la formation d'un andain unique de plus grand volume. Le bras (7, 8) comporte une première partie (13) reliée directement au châssis (2) au moyen d'une première articulation comportant un premier axe de pivotement (14). Ce premier axe de pivotement (14) est orienté de sorte que la première partie (13) du bras (7, 8) puisse être déplacée dans un plan transversal à la direction d'avancement (A). Ce premier axe de pivotement (14) présente par exemple une orientation rapprochée de l'horizontale et/ou rapprochée de la direction d'avancement (A). Un bras (7) placé à l'avant des roues (6) comporte une deuxième partie (15) reliée de manière mobile à la première partie (13) au moyen d'une deuxième articulation comportant un deuxième axe de pivotement (16). Ce deuxième axe de pivotement (16) présente, par exemple, une orientation rapprochée de l'horizontale et/ou rapprochée de la direction d'avancement (A). A son extrémité distante de la deuxième articulation, la deuxième partie (15) du bras (7) porte un outil de travail (9). Un bras (8) placé à l'arrière des roues (6) comporte une deuxième partie (17) reliée de manière mobile à la première partie (13) au moyen d'une liaison coulissante (18). Cette deuxième partie (17) comporte par exemple un chariot portant l'outil de travail (9) et pouvant rouler à l'intérieur d'une rainure pratiquée dans la première partie (13) du bras (8) et orientée suivant une direction longitudinale de cette première partie (13) du bras (8). La liaison coulissante (18) peut également être obtenue par une deuxième partie (17) en forme de tube, portant l'outil de travail (9), et coulissant à l'intérieur d'un tube légèrement plus grand que comporte la première partie (13).

Un premier dispositif d'actionnement (19) est relié à la première partie (13) du bras (7, 8). Ce premier dispositif d'actionnement (19) est également relié au châssis (2). Ce premier dispositif d'actionnement (19) comporte un vérin (20), notamment un vérin hydraulique, articulé au châssis (2) et à la première partie (13). Le premier dispositif d'actionnement (19) fait pivoter la première partie (13) du bras (7, 8) par rapport au châssis (2) dans un plan transversal à la direction d'avancement (A). Ce plan est également sensiblement vertical. Le premier dispositif d'actionnement (19) est piloté pour déplacer verticalement l'outil de travail (9) entre au moins une position de travail et au moins une position relevée dans laquelle l'outil de travail (9) s'étend à une certaine hauteur du sol, par exemple, pour le passage au-dessus d'andains ou d'obstacles. Sur la figure 1, chaque outil de travail (9) placé, vu dans la direction d'avancement (A), à droite de la poutre centrale (3) du châssis (2), est en position de travail, tandis que chaque outil de travail (9) situé à gauche est dans une position relevée. Dans ces positions, la deuxième articulation d'un bras (7) situé à l'avant des roues (6) s'étend, en projection sur un plan sensiblement horizontal, à une certaine distance de la première articulation. La liaison coulissante (18) d'un bras (8) situé à l'arrière des roues (6) est orientée transversalement à la direction d'avancement (A). Lorsque l'outil de travail (9) correspondant repose sur le sol, cette liaison coulissante (18) présente une orientation rapprochée de l'horizontale. Dans la position relevée de l'outil de travail (9), la liaison coulissante (18) est orientée de manière oblique vers le haut et vers l'extérieur par rapport à la poutre centrale (3) du châssis (2). Le premier dispositif d'actionnement (19) peut également être piloté pour déplacer l'outil de travail (9) vers une position de transport. Dans cette position, la deuxième articulation d'un bras (7) situé à l'avant des roues (6) est située sensiblement au-dessus de la première articulation. Quant à un bras (8) placé à l'arrière des roues (6), sa liaison coulissante (18) présente alors une orientation rapprochée de la verticale.

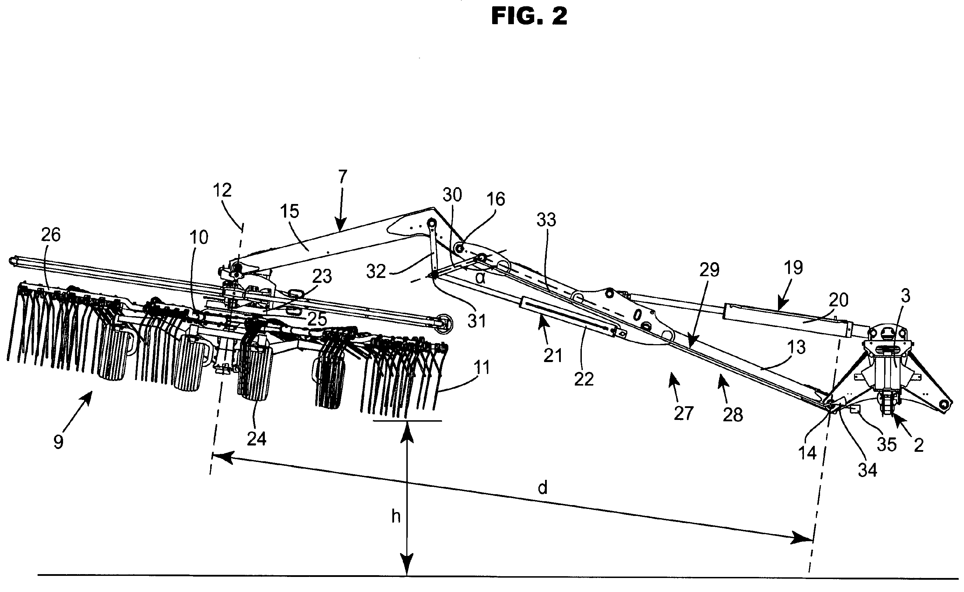

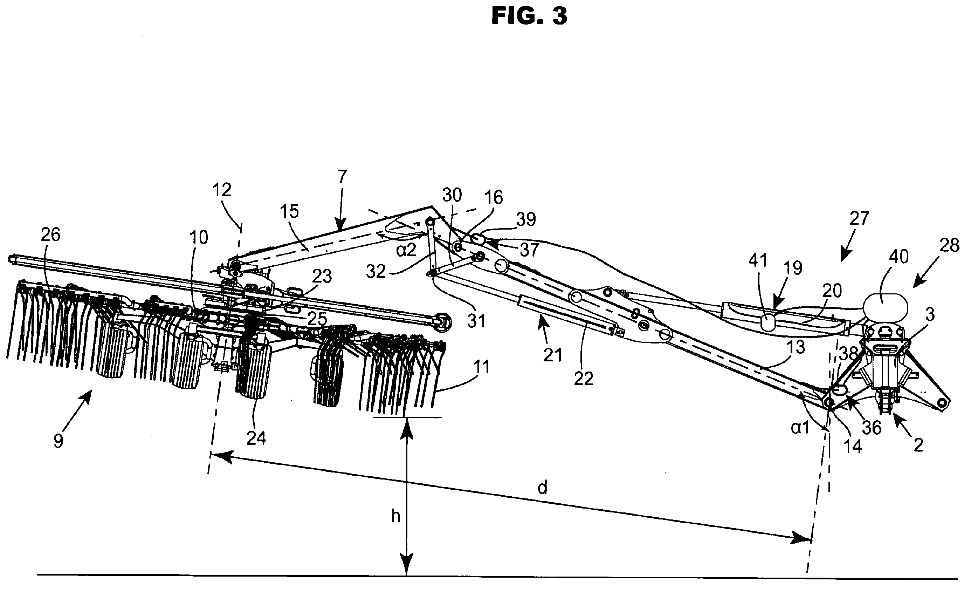

Un deuxième dispositif d'actionnement (21) est relié à la deuxième partie (17) du bras (7, 8). Ce deuxième dispositif d'actionnement (21) est relié à la première partie (13). Ce deuxième dispositif d'actionnement (21) comporte un vérin (22), notamment un vérin hydraulique, articulé à la première partie (13) et à la deuxième partie (15, 17). Le pilotage du deuxième dispositif d'actionnement (21) permet de régler la distance (d), mesurée transversalement à la direction d'avancement (A), de laquelle l'outil de travail (9) s'étend latéralement par rapport au châssis (2), en vue de régler la largeur de travail de la machine (1) et/ou la largeur de l'andain formé. Cette distance (d) sépare la poutre centrale (3) du châssis (2) d'une référence géométrique de l'outil de travail (9). Au niveau du châssis (2), la distance (d) est, par exemple, comptée à partir du premier axe de pivotement (14) du bras (7, 8). La référence géométrique est, par exemple, une extrémité intérieure de l'outil de travail (9) voisine de la poutre centrale (3). Dans la forme de réalisation des figures, la référence géométrique est l'axe de rotation (12) du rotor (10), et la distance (d) est mesurée entre cet axe de rotation (12) et le premier axe de pivotement (14) du bras (7, 8) au châssis (2). Pour un bras (7) situé à l'avant des roues (6), le deuxième dispositif d'actionnement (21) fait pivoter la deuxième partie (15) du bras (7) par rapport à la première partie (13) du bras (7). Ce pivotement a lieu dans un plan transversal à la direction d'avancement (A). Ce plan est également sensiblement vertical. L'outil de travail (9) suit alors une trajectoire circulaire autour du deuxième axe de pivotement (16). Il apparaît donc que, si dans le même temps le premier dispositif d'actionnement (19) demeure fixe, la hauteur (h) de l'outil de travail (9) par rapport au sol varie. Pour un outil de travail (9), cette hauteur (h) sépare le sol des outils (11), notamment des extrémités inférieures de ces outils (11), ces extrémités inférieures étant représentées, dans la forme de réalisation des figures, par les pointes des fourches. En particulier, cette hauteur (h) sépare le sol de l'extrémité inférieure de l'outil (11) situé le plus bas lorsque l'outil de travail (9) est relevé. En effet, ainsi qu'il apparaît sur les figures 2 et 3, l'outil de travail (9) se trouvant dans la position relevée peut ne pas s'étendre parallèlement au sol. Au bas de ces figures, le sol est représenté par un trait horizontal, à partir duquel la hauteur (h) est comptée. Pour un bras (8) situé à l'arrière des roues (6), un mouvement du deuxième dispositif d'actionnement (21) conduit à translater la deuxième partie (17) du bras (8) par rapport à la première partie (13) du bras (8) à laquelle elle est reliée au moyen de la liaison coulissante (18). La distance (d) séparant l'outil de travail (9) du châssis (2) peut être réglée entre une valeur minimale et une valeur maximale. Dans la forme de réalisation des figures, ces deux valeurs sont différentes entre les outils de travail (9) placés à l'avant des roues (6) et ceux placés à l'arrière.

Le rotor (10) d'un outil de travail (9) comporte un carter (23). Ce dernier est relié au bras (7, 8) correspondant. Le carter (23) porte l'axe de rotation (12). Cet axe de rotation (12) comporte à son extrémité inférieure un support avec des roulettes (24) situées sous le rotor (10). Ces dernières roulent sur le sol durant le travail et font suivre les dénivellations du sol aux rotors (10). Le support et les roulettes (24) peuvent avantageusement coulisser le long de l'axe de rotation (12) de manière à régler la distance des outils (11) par rapport au sol, par exemple au moyen d'un vérin. Sur la partie de l'axe de rotation (12), qui s'étend en-dessous du carter (23), est disposé un boîtier (25). Celui-ci est monté sur l'axe de rotation (12) à l'aide de roulements afin de pouvoir être entraîné en rotation. Pour entraîner le rotor (10), le côté supérieur du boîtier (25) est, par exemple, muni d'une roue dentée qui se situe dans le carter (23). Cette roue engrène avec un pignon, lequel peut être relié à une prise de force du tracteur (5) à l'aide d'arbres de transmission intermédiaires connus de l'homme de l'art. L'entraînement en rotation du rotor (10) peut également être effectué avec un moteur hydraulique ou électrique. Le rotor (10) comporte une multitude de bras oscillants (26) portant les outils (11). Ces bras oscillants (26) sont supportés par le boîtier (25). Ces bras oscillants (26) s'étendent en forme de rayons par rapport à l'axe de rotation (12), dans un plan sensiblement perpendiculaire à celui-ci. Les bras oscillants (26) comportent une partie interne liée au boîtier (25) et une partie externe portant les outils (11). Les parties internes des bras oscillants (26) sont liées au boîtier (25) par un ou plusieurs paliers de manière à pouvoir tourner sur elles-mêmes. Sur la partie de l'axe de rotation (12) qui se situe dans le boîtier (25) est montée une came fixe destinée à commander les bras oscillants (26) durant le travail. Pour cela, chacun des bras oscillants (26) possède à son extrémité qui s'étend à l'intérieur du boîtier (25), un levier avec un galet qui est guidé dans une gorge de la came. Au travail, les outils (11) ramassent les produits notamment sur la partie avant de leur trajectoire et les déposent sous la forme d'un andain dans la partie latérale de leur trajectoire.

Une machine (1) agricole pour la récolte de fourrage conforme à l'invention peut être une machine de fenaison, par exemple une andaineuse, notamment une andaineuse à quatre rotors telle que celle qui vient d'être décrite. Bien entendu, une machine (1) agricole pour la récolte de fourrage conforme à l'invention peut aussi être une andaineuse à deux rotors placés chacun d'un côté respectif d'une poutre centrale du châssis. La poutre centrale pourrait aussi ne porter qu'un seul bras et qu'un seul rotor. Par ailleurs, la machine (1) peut être, comme celle des figures, du type traînée ou semi-portée avec un train de roues principal au moyen duquel le châssis de la machine (1) repose directement au sol. La machine (1) peut aussi être du type portée, au moyen de l'attelage trois points du tracteur (5). Dans ce cas, le châssis de la machine (1) repose indirectement au sol pendant le travail, au moyen des roulettes placées sous les outils de travail (9). Une machine (1) agricole pour la récolte de fourrage conforme à l'invention peut aussi être une machine automotrice, avec un châssis mis en mouvement au moyen d'un ou de plusieurs trains de roues motrices et/ou directrices. Une machine (1) agricole pour la récolte de fourrage conforme à l'invention peut aussi être du type connu sous l'appellation de « Merger ». L'outil de travail d'une telle machine comporte un ramasseur. Celui-ci comporte un rotor pouvant tourner autour d'un axe orienté, pendant le travail, transversalement à la direction d'avancement (A) et sensiblement horizontalement. Ce rotor peut être muni de dents qui décrivent une enveloppe courbe lorsque le rotor est animé. Le rotor peut aussi servir de support d'enroulement à une bande animée qui porte des dents, des fourches ou des crochets. Le ramasseur précède un convoyeur qui peut être du type à tapis, à rouleaux ou à vis. Le convoyeur reçoit les végétaux projetés vers l'arrière par le ramasseur, et les déplace transversalement au ramasseur. Les végétaux sont alors redéposés au sol sous la forme d'un andain en vue de leur reprise ultérieure.

Suivant d'autres formes de réalisation non représentées de la machine (1), la première partie (13) du bras (7, 8) peut être reliée indirectement au châssis (2), par exemple au moyen d'un ensemble de bielles articulées. Un tel ensemble est par exemple un quadrilatère articulé. Le bras (7, 8) peut également comporter plus de deux parties mobiles. Suivant d'autres formes de réalisation non représentées de la machine (1), les parties (13, 15, 17) du bras (7, 8) et/ou les dispositifs d'actionnement (19, 21) peuvent être agencés de telle sorte que le réglage de la distance (d) entre l'outil de travail (9) et le châssis (2) soit obtenu par l'actionnement du premier dispositif d'actionnement (19), ou encore par l'actionnement, séquentiel ou simultané, des deux dispositifs d'actionnement (19 et 21). De même, les parties (13, 15, 17) du bras (7, 8) et/ou les dispositifs d'actionnement (19 et 21) peuvent être agencés de telle sorte que le déplacement vertical de l'outil de travail (9), au moins entre la position de travail et la position relevée, soit obtenu par l'actionnement du deuxième dispositif d'actionnement (21), ou encore par l'actionnement, séquentiel ou simultané, des deux dispositifs d'actionnement (19 et 21).

La machine (1) selon l'invention comporte des moyens d'asservissement (27) en position de l'un au moins des premier et deuxième dispositifs d'actionnement (19 et 21) à une consigne de réglage qui détermine une hauteur cible de l'outil de travail (9) par rapport au sol. Ces moyens d'asservissement (27) sont configurés pour relever l'outil de travail (9), à une hauteur (h) du sol sensiblement égale à cette hauteur cible, depuis au moins deux positions transversales de travail de l'outil de travail situées à une distance (d) du châssis (2), comprise entre les valeurs minimale et maximale.

Suivant une caractéristique avantageuse de l'invention, les moyens d'asservissement (27) sont configurés pour relever l'outil de travail à une hauteur (h) du sol sensiblement égale à cette hauteur cible, depuis toute position transversale de travail de l'outil de travail (9) située à une distance (d) du châssis (2) comprise entre les valeurs minimale et maximale.

Les moyens d'asservissement (27) comportent un moyen de transformation (28) qui délivre, à partir d'au moins une grandeur physique d'entrée représentative d'une position transversale de travail de l'outil de travail (9) située à une distance (d) du châssis (2), comprise entre les valeurs minimale et maximale, au moins une grandeur de commande utilisée pour le pilotage de l'un au moins des premier et deuxième dispositifs d'actionnement (19 et 21).

La machine (1) conforme à la forme de réalisation de la figure 1 comporte une première variante de réalisation des moyens d'asservissement (27) d'un bras (7) placé à l'avant des roues (6). Dans cette première variante de réalisation illustrée à la figure 2, le moyen de transformation (28) comporte un moyen de renvoi (29) à bielles et/ou à câbles articulé à la deuxième partie (15) du bras (7) d'une part, et à la première partie (13) du bras (7) d'autre part. Un premier levier (30), articulé à la première partie (13) du bras (7), partage un axe (31) commun d'articulation avec un deuxième levier (32), lui-même articulé à la deuxième partie (15) du bras (7). Ces deux leviers (30 et 32) sont disposés à proximité du deuxième axe de pivotement (16). L'axe (31) commun d'articulation est relié à un deuxième vérin (22) formant le deuxième dispositif d'actionnement (21). Ce deuxième vérin (22) est articulé à la première partie (13) du bras (7). Le premier levier (30) porte une tringle (33) qui s'étend en direction du premier axe de pivotement (14), le long de la première partie (13) du bras (7). La tringle (33) du moyen de renvoi (29) agit sur un actionneur mécanique (34) auquel elle est reliée. Cet actionneur mécanique (34) est formé par un basculeur. Ce basculeur est monté à pivotement sur un axe confondu avec le premier axe de pivotement (14). Le côté du basculeur situé, par rapport à cet axe, du côté opposé à celui où le basculeur est relié à la tringle (33), agit sur une came portée par l'axe de pivotement d'un organe de commande (35) formé par une vanne hydraulique liée au châssis (2). Cette dernière est placée sur l'alimentation hydraulique d'un premier vérin (20) formant le premier dispositif d'actionnement (19), lequel premier vérin (20) est articulé entre le châssis (2) et la première partie (13) du bras (7). Le déplacement du basculeur induit un déplacement de la came. Selon que le premier vérin (20) est alimenté au raccourcissement ou à l'allongement, c'est-à-dire selon que la première partie (13) du bras (7) est pivotée vers le haut ou vers le bas, le déplacement de la came pilote l'ouverture ou la fermeture de la vanne, de manière à autoriser ou interrompre l'alimentation hydraulique du premier vérin (20). Dans cette première variante de réalisation, le premier vérin (20) est affecté au déplacement vertical de l'outil de travail (9) tandis que le deuxième vérin (22) est affecté au réglage de la largeur de travail. Dans ce but, le deuxième vérin (22) est piloté de manière à éloigner ou rapprocher la deuxième partie (15) du bras (7) de la première partie (13) du bras (7) et donc du châssis (2). Ainsi, l'outil de travail (9) se trouve placé à une distance (d) du châssis (2) comprise entre les valeurs minimale et maximale. Ce déplacement de la deuxième partie (15) du bras (7) modifie un angle (α) que forme le premier levier (30) avec une longueur de la première partie (13) du bras (7). Cet angle (α) forme donc une grandeur physique d'entrée représentative de la position transversale de travail de l'outil de travail (9) située à une distance (d) du châssis (2) comprise entre les valeurs minimale et maximale. Dans cette première variante de réalisation, la grandeur physique d'entrée est plus particulièrement représentative de la position de la deuxième partie (15) du bras (7) par rapport à la première partie (13) du bras (7). Via la tringle (33), le moyen de transformation (28) délivre, à partir de cette grandeur physique d'entrée, une grandeur de commande à l'organe de commande (35) relié au premier vérin (20) du premier dispositif d'actionnement (19). C'est en l'occurrence la position du basculeur formant l'actionneur mécanique (34) qui est utilisée comme ladite grandeur de commande. Cette position du basculeur peut être repérée par un angle ou par une distance dont la valeur représente la valeur prise par la grandeur de commande. Lorsque la première partie (13) du bras (7) est pivotée vers le haut au moyen du premier vérin (20), le basculeur se déplace avec cette première partie (13) du bras (7) et rejoint à moment donné une position dans laquelle il referme la vanne. A cette position bien précise du basculeur est ainsi associée une valeur cible de la grandeur de commande, et l'organe de commande autorise un flux de puissance - ici, un flux hydraulique - vers le premier vérin (20) tant que la valeur de la grandeur de commande - valeur de l'angle ou de la distance définissant la position du basculeur à un instant t - n'a pas atteint cette valeur cible - valeur de l'angle ou de la distance définissant la position du basculeur fermant la vanne. L'interaction du moyen de renvoi (29) avec la première partie (13) du bras (7), avec la deuxième partie (15) du bras (7) et, via l'actionneur mécanique (34), avec l'organe de commande (35), implique l'existence d'une relation qui lie la valeur cible à la valeur prise par la grandeur physique d'entrée, à la consigne de réglage, à des paramètres dimensionnels du bras (7) et/ou du moyen de transformation (28) et à des paramètres de localisation de la première partie (13) du bras (7) sur le châssis (2). Lorsque l'outil de travail (9) repose au sol dans une position transversale de travail donnée, la consigne de réglage qui détermine la hauteur cible de relevage de l'outil de travail (9), fixe une certaine orientation angulaire du basculeur, autour de son axe, par rapport à la première partie (13) du bras (7), ou encore par rapport à la vanne. Les moyens d'asservissement (27) peuvent avantageusement comporter un moyen de réglage permettant d'ajuster cette consigne de réglage, via un décalage permanent de l'actionneur mécanique (34) en position par rapport au bras (7) et/ou par rapport à l'organe de commande (35). Ainsi, pour une position transversale de travail donnée de l'outil de travail (9) au sol, le moyen de réglage modifie l'orientation angulaire du basculeur autour de son axe. Ceci a pour effet, pour cette position transversale de travail donnée, de modifier l'angle de pivotement que forme la première partie (13) du bras (7) avec l'horizontale auquel la vanne passe d'une configuration ouverte ou à une configuration fermée, et vice versa. Le moyen de réglage peut être un vérin hydraulique ou un système vis-écrou faisant partie du moyen de renvoi (29). Le moyen de réglage peut aussi être une butée réglable sur le basculeur. Enfin, le moyen de réglage peut aussi être formé par un moyen d'ajustement de la position de la vanne sur le châssis (2). Les paramètres dimensionnels du bras (7) sont, par exemple, les longueurs des première et deuxième parties (13 et 15) du bras (7). Les paramètres dimensionnels du moyen de transformation (28) sont, par exemple, les longueurs des premier et deuxième leviers (30 et 32), la longueur de la tringle (33), le bras de levier entre le premier levier (30) et la tringle (33) et celui entre la tringle (33) et le basculeur. Un paramètre de localisation de la première partie (13) du bras (7) sur le châssis (2) est la hauteur du premier axe de pivotement (14) par rapport au sol. Un autre paramètre de localisation est, par exemple, la distance séparant le premier axe de pivotement (14) de l'axe géométrique longitudinal de la poutre centrale (3) du châssis (2). Une augmentation de la largeur de travail réglée au moyen du deuxième vérin (22), conduit à une augmentation de l'angle (α). La tringle (33) déplace alors le basculeur autour de son axe dans un sens tel que le côté du basculeur agissant sur la came de la vanne est abaissé. Lorsque par la suite, l'outil de travail (9) est déplacé de sa position de travail vers une position relevée, le basculeur va alors refermer relativement tôt la vanne, et l'angle de pivotement correspondant de la première partie (13) du bras (7) va être petit. Si la largeur de travail est réglée sur une valeur plus faible, le basculeur va refermer plus tardivement la vanne lors du déplacement de l'outil de travail (9) de sa position de travail vers une position relevée. L'angle de pivotement correspondant de la première partie (13) du bras (7) va alors être plus grand. Les paramètres dimensionnels du moyen de transformation (28), éventuellement ceux du bras (7), sont alors choisis de sorte que, pour la ou pour chaque consigne de réglage, l'outil de travail (9) soit relevé à une hauteur (h) du sol sensiblement égale à la hauteur cible déterminée par la consigne de réglage, et ce, depuis au moins deux positions transversales de travail de l'outil de travail (9), notamment depuis chaque position transversale de travail de l'outil de travail (9).

La machine (1) conforme à la forme de réalisation de la figure 1 comporte une deuxième variante de réalisation des moyens d'asservissement (27) d'un bras (7) placé à l'avant des roues (6). Un premier levier (30), articulé à la première partie (13) du bras (7), partage un axe (31) commun d'articulation avec un deuxième levier (32), lui-même articulé à la deuxième partie (15) du bras (7). Ces deux leviers (30 et 32) sont disposés à proximité du deuxième axe de pivotement (16). L'axe (31) commun d'articulation est relié à un deuxième vérin (22) formant le deuxième dispositif d'actionnement (21). Ce deuxième vérin (22) est articulé à la première partie (13) du bras (7). Dans cette deuxième variante de réalisation illustrée à la figure 3, les moyens d'asservissement (27) comportent un moyen de transformation (28) utilisant deux grandeurs physiques d'entrée, dont l'une au moins est représentative d'une position transversale de travail de l'outil de travail (9) située à une distance (d) du châssis (2) comprise entre les valeurs minimale et maximale. Dans cette deuxième variante de réalisation, le premier vérin (20) est utilisé pour le déplacement vertical de l'outil de travail (9) tandis que le deuxième vérin (22) est affecté au réglage de la distance (d) entre l'outil de travail (9) et le châssis (2). Le moyen de transformation (28) comporte un premier moyen de mesure (36) fournissant un premier signal image d'une première grandeur physique d'entrée représentative d'une position de la première partie (13) du bras (7) par rapport au châssis (2). De plus, le moyen de transformation (28) comporte un deuxième moyen de mesure (37) fournissant un deuxième signal image d'une deuxième grandeur physique d'entrée représentative d'une position de la deuxième partie (15) du bras (7) par rapport à la première partie (13) du bras (7). Le premier moyen de mesure (36) comporte un premier capteur d'angle (38) disposé au voisinage du premier axe de pivotement (14). Ce premier capteur d'angle (38) est disposé entre la première partie (13) du bras (7) et le châssis (2). La première grandeur physique d'entrée est alors un premier angle (α1) que forme la première partie (13) du bras (7) par rapport au châssis (2), par exemple, tel qu'illustré à la figure 3, par rapport à une verticale passant par le premier axe de pivotement (14). Ce premier angle (α1) est notamment mesuré dans le plan transversal à la direction d'avancement, dans lequel la première partie (13) du bras (7) peut pivoter par rapport au châssis (2). Le premier signal est un signal électrique délivré par ce premier capteur d'angle (38). Le deuxième moyen de mesure (37) comporte un deuxième capteur d'angle (39) disposé au voisinage du deuxième axe de pivotement (16). Ce deuxième capteur d'angle (39) est disposé entre les première et deuxième parties (13 et 15) du bras (7). La deuxième grandeur physique d'entrée est alors un deuxième angle (α2) que forme la deuxième partie (15) du bras (7) par rapport à la première partie (13) du bras (7). Le deuxième signal est un signal électrique délivré par ce deuxième capteur d'angle (39). Dans cette deuxième variante de réalisation, le moyen de transformation (28) comporte un calculateur (40) porté par le châssis (2). Ce dernier est relié aux premier et deuxième moyens de mesure (36 et 37) dont il reçoit en temps réel les premier et deuxième signaux. Tel qu'illustré à la figure 3, la liaison du calculateur (40) aux premier et deuxième moyens de mesure (36 et 37) a lieu via des faisceaux électriques. Par ailleurs, le calculateur (40) contient une mémoire lui permettant de mémoriser la consigne de réglage qui détermine la hauteur cible de relevage de l'outil de travail (9). Le moyen de transformation (28) délivre, à partir des première et deuxième grandeurs physiques d'entrée, une grandeur de commande utilisée pour le pilotage d'un dispositif d'actionnement (19). A cette fin, la grandeur de commande est délivrée en temps réel par le calculateur (40) à partir des premier et deuxième signaux images de ces première et deuxième grandeurs physiques d'entrée. La grandeur de commande est délivrée en temps réel par le calculateur (40) à un organe de commande (41) en vue de piloter le premier vérin (20) du premier dispositif d'actionnement (19). Cette grandeur de commande est un signal électrique délivré, ainsi qu'illustré à la figure 3, via un faisceau électrique reliant le calculateur (40) à l'organe de commande (41). L'organe de commande (41) comporte une électrovanne. Cette électrovanne est pilotée à l'ouverture et à la fermeture et est reliée au premier vérin (20). Le calculateur (40) détermine une valeur cible pour la grandeur de commande. L'électrovanne bascule d'une configuration ouverte à une configuration fermée, et vice versa, lorsque cette grandeur de commande a pour valeur, la valeur cible. L'organe de commande (41) autorise un flux de puissance - ici, un flux hydraulique - vers le premier vérin (20) tant que la valeur prise par la grandeur de commande n'a pas atteint la valeur cible. Cette valeur cible est liée par une relation aux valeurs prises par les première et deuxième grandeurs physiques d'entrée, à la consigne de réglage, à des paramètres dimensionnels du bras (7) et à des paramètres de localisation de la première partie (13) du bras (7) sur le châssis (2). Cette relation comporte les fonctions de transfert respectives des premier et deuxième moyens de mesure (36 et 37) ainsi qu'une loi stockée par le calculateur (40). Chaque fonction de transfert lie la première respectivement la deuxième grandeur physique d'entrée - angle mesuré, à savoir premier angle (α1) respectivement deuxième angle (α2) - au premier respectivement deuxième signal électrique. La loi fait intervenir les valeurs prises en temps réel par ces premier et deuxième signaux électriques, la consigne de réglage, ainsi que lesdits paramètres dimensionnels du bras (7) et paramètres de localisation de la première partie (13) du bras (7) sur le châssis (2). Selon la valeur prise par le deuxième angle (α2) entre les première et deuxième parties (13 et 15) du bras (7), convertie par le deuxième capteur d'angle (39) en le deuxième signal électrique transmis au calculateur (40), ce dernier détermine, sur la base de la relation stockée et de la consigne de réglage ayant, dans cette relation, une certaine valeur, de quel premier angle (α1) la première partie (13) du bras (7) doit être pivotée vers le haut lorsque l'outil de travail (9) est déplacé de sa position de travail vers une position relevée coïncidant avec la hauteur cible associée à la consigne de réglage. A cette fin, le calculateur (40) détermine, sur la base de la relation stockée et de la consigne de réglage, une première valeur cible pour le premier signal délivré par le premier capteur d'angle (38). Cette première valeur cible est la valeur que doit prendre le premier signal lorsque le premier angle (α1) de pivotement de la première partie (13) du bras (7) atteint la valeur correspondant à l'outil de travail (9) situé à une hauteur (h) du sol sensiblement égale à la hauteur cible. Le calculateur (40) comporte par ailleurs un premier comparateur qui délivre un premier signal de comparaison fonction de l'écart entre la première valeur cible et la valeur prise par le premier signal. En fonction de la valeur prise par ce premier signal de comparaison, le calculateur (40) détermine la valeur de la grandeur de commande. Lorsque la valeur prise par le premier signal rejoint la première valeur cible, le calculateur (40) affecte la valeur cible à la valeur de la grandeur de commande. Autrement dit, la valeur de la grandeur de commande est telle que l'électrovanne autorise le passage d'un flux hydraulique de puissance vers le premier vérin (20) tant que le premier signal n'est pas égal à la première valeur cible correspondant à la hauteur (h) de relevage souhaitée de l'outil de travail (9) pour la largeur de travail préréglée. Lorsque la distance (d) de l'outil de travail (9) au châssis (2) est modifiée par actionnement du deuxième vérin (22), le deuxième capteur d'angle (39) informe en temps réel le calculateur (40) du deuxième angle (α2) effectif entre les première et deuxième parties (13 et 15) du bras (7). Ce faisant, le calculateur (40) recalcule en temps réel, sur la base de la loi stockée et de la consigne de réglage, la nouvelle première valeur cible en vue d'adapter le premier angle (α1) de pivotement de la première partie (13) du bras (7) à la nouvelle largeur de travail réglée. Dans cette deuxième variante de réalisation, les moyens d'asservissement (27) comportent avantageusement un moyen de réglage permettant d'ajuster la consigne de réglage. Ce moyen de réglage comporte par exemple un terminal de commande depuis lequel l'utilisateur peut régler la consigne de réglage.

Bien que les première et deuxième variantes de réalisation aient été décrites précédemment en lien avec un bras (7) situé à l'avant des roues (6), comportant une deuxième partie (15) articulée à une première partie (13), ces deux variantes de réalisation sont tout à fait transposables à un bras (8) situé à l'arrière des roues (6). Dans la suite de la description, une troisième variante de réalisation est définie comme étant une adaptation de la première variante de réalisation à ce bras (8). De manière analogue, une quatrième variante de réalisation est définie comme étant une adaptation de la deuxième variante de réalisation à ce bras (8) situé à l'arrière des roues (6).

La troisième variante de réalisation diffère de la première essentiellement par le fait que le moyen de renvoi (29) à bielles et/ou à câbles est relié au chariot coulissant que comporte la deuxième partie (17). Le deuxième vérin (22) est articulé entre la première partie (13) du bras (8) et le chariot coulissant. Le moyen de renvoi (29) agit sur un actionneur mécanique (34) auquel il est relié. L'agencement et le fonctionnement de cet actionneur mécanique (34) sont identiques à ceux prévus dans la première variante de réalisation. Dans cette troisième variante de réalisation, le premier vérin (20) est affecté au déplacement vertical de l'outil de travail (9) tandis que le deuxième vérin (22) est affecté au réglage de la largeur de travail. Dans ce but, le deuxième vérin (22) est piloté de manière à éloigner ou rapprocher le chariot coulissant du premier axe de pivotement (14) du bras (8) sur le châssis (2). Ainsi, l'outil de travail (9) se trouve placé à une distance (d) du châssis (2) comprise entre les valeurs minimale et maximale. Ce déplacement de la deuxième partie (17) du bras (8) modifie une deuxième distance mesurée entre deux références respectives des première et deuxième parties (13 et 17) du bras (8). Cette deuxième distance forme donc une grandeur physique d'entrée représentative de la position transversale de travail de l'outil de travail (9) située à une distance (d) du châssis (2) comprise entre les valeurs minimale et maximale. Via le moyen de renvoi (29), le moyen de transformation (28) délivre, à partir de cette grandeur physique d'entrée, une grandeur de commande à un organe de commande (35) représenté par une vanne hydraulique reliée au premier vérin (20). L'interaction de l'actionneur mécanique (34) avec la vanne est, dans son principe, identique à celle décrite pour la première variante de réalisation. Une augmentation de la largeur de travail réglée, au moyen du deuxième vérin (22), conduit à une augmentation de la deuxième distance utilisée comme grandeur physique d'entrée. En fonction de la valeur de cette deuxième distance, l'actionneur mécanique (34) referme plus ou moins tôt la vanne lorsque l'outil de travail (9) est déplacé de sa position de travail vers une position relevée. De cette manière, l'outil de travail (9) est relevé à une hauteur (h) égale à la hauteur cible fixée par la consigne de réglage, depuis au moins deux positions transversales de travail de l'outil de travail (9), notamment depuis toute position transversale de travail.

La quatrième variante de réalisation diffère de la deuxième essentiellement par le fait que le deuxième moyen de mesure (37) comporte un deuxième capteur de distance disposé entre le chariot coulissant de la deuxième partie (17) et la première partie (13) du bras (8). La deuxième grandeur physique d'entrée est alors une deuxième distance entre ces parties (13 et 17). La fonction de transfert du deuxième moyen de mesure (37) lie alors cette deuxième distance mesurée au deuxième signal électrique. Selon la valeur de cette deuxième distance, convertie par le deuxième capteur en le deuxième signal électrique transmis au calculateur (40), ce dernier détermine, sur la base de la relation stockée et de la consigne de réglage ayant, dans cette relation, une certaine valeur, de quel angle la première partie (13) du bras (8) doit être pivotée vers le haut lorsque l'outil de travail (9) est déplacé de sa position de travail vers une position relevée coïncidant avec la hauteur cible associée à la consigne de réglage. Lorsque la distance (d) de l'outil de travail (9) au châssis (2) est modifiée par actionnement du deuxième vérin (22), le deuxième capteur informe en temps réel le calculateur (40) de la deuxième distance effective entre les première et deuxième parties (13 et 17) du bras (8). Ce faisant, le calculateur (40) recalcule en temps réel, sur la base de la loi stockée et de la consigne de réglage, une nouvelle première valeur cible pour le premier signal, en vue d'adapter l'angle de pivotement de la première partie (13) du bras (8) à la nouvelle largeur de travail réglée.

D'autres variantes de réalisation des moyens d'asservissement (27) peuvent prévoir une seule grandeur physique d'entrée représentative d'une position de la première partie (13) du bras (7, 8) par rapport au châssis (2). Les première, deuxième et troisième variantes de réalisation pourraient être modifiées pour que la deuxième grandeur physique d'entrée soit représentative d'une position de la deuxième partie (15, 17) du bras (7, 8) par rapport au châssis (2).

De manière générale, une grandeur physique d'entrée du moyen de transformation (28) peut être une distance linéaire ou angulaire entre les parties (13, 15, 17) du bras (7, 8) ou entre une partie (13, 15, 17) du bras (7, 8) et le châssis (2), ou encore une inclinaison mesurée d'une partie (13, 15, 17) du bras (7, 8) par rapport au sol. Un moyen de mesure associé peut être un capteur d'angle, un capteur de distance ou un inclinomètre. Dans la deuxième variante de réalisation, le deuxième moyen de mesure (37) peut comporter, en lieu et place du deuxième capteur d'angle (39), un deuxième capteur de distance. Dans ce cas, la deuxième grandeur physique d'entrée est une deuxième distance mesurée entre deux références respectives de la première partie (13) du bras (7) et de la deuxième partie (15) du bras (7).

Une forme de réalisation de la machine peut prévoir que la grandeur de commande est délivrée à un organe de commande (35, 41) piloté à l'ouverture et à la fermeture et relié au deuxième dispositif d'actionnement (21), et que l'organe de commande (35, 41) autorise un flux de puissance vers le deuxième dispositif d'actionnement (21) tant que la valeur de la grandeur de commande n'a pas atteint une valeur cible. Le moyen de transformation (28) conforme à la première variante de réalisation serait alors modifié pour que le moyen de renvoi (29) agisse sur un actionneur mécanique (34) dont une position serait utilisée comme grandeur de commande de la vanne formant l'organe de commande (35) et reliée au deuxième dispositif d'actionnement (21). Le moyen de transformation (28), conforme à la deuxième variante de réalisation, serait modifié pour que le calculateur (40) mémorise la consigne de réglage, reçoive en temps réel les premier et deuxième signaux et délivre en temps réel la grandeur de commande pour le pilotage du deuxième dispositif d'actionnement (21).

D'autres formes de réalisation, plus ou moins élaborées de la machine (1), peuvent prévoir que le moyen de transformation (28) délivre, à partir d'une ou de plusieurs grandeurs physique d'entrée représentatives d'une position transversale de travail de l'outil de travail (9), située à une distance (d) du châssis (2), comprise entre les valeurs minimale et maximale, plusieurs grandeurs de commande pour le pilotage, séquentiel ou simultané, des premier et deuxième dispositifs d'actionnement (19 et 21). Dans ce cas, chaque grandeur de commande est délivrée à un organe de commande (35, 41) respectif, piloté à l'ouverture et à la fermeture et relié au premier respectivement au deuxième dispositif d'actionnement (19, 21). Chaque organe de commande (35, 41) respectif autorise alors un flux de puissance vers le premier respectivement le deuxième dispositif d'actionnement (19, 21) tant que la valeur de la grandeur de commande correspondante n'a pas atteinte une valeur cible correspondante. Dans ce cas, une relation lie les valeurs cibles des grandeurs de commande aux valeurs prises par les grandeurs physiques d'entrée, à la consigne de réglage, à des paramètres dimensionnels du bras (7, 8) et/ou du moyen de transformation (28) et à des paramètres de localisation de la première partie (13) du bras (7, 8) sur le châssis (2). Un moyen de transformation (28), analogue à celui de la deuxième ou de la quatrième variante de réalisation, est alors tel que le calculateur (40) mémorise la consigne de réglage, reçoit en temps réel les premier et deuxième signaux et délivre en temps réel les grandeurs de commande pour le pilotage des premier et deuxième dispositifs d'actionnement (19 et 21). Ce calculateur (40) détermine, sur la base de la loi qu'il stocke et de la consigne de réglage qu'il mémorise, une première valeur cible pour le premier signal et une deuxième valeur cible pour le deuxième signal. A cette fin, ce calculateur (40) comporte, en plus d'un premier comparateur conforme à celui que comporte la deuxième variante de réalisation, un deuxième comparateur. Celui-ci délivre un deuxième signal de comparaison fonction de l'écart entre la deuxième valeur cible et la valeur prise par le deuxième signal. Le calculateur (40) détermine alors la valeur de chaque grandeur de commande en fonction de la valeur prise par le premier signal de comparaison et de la valeur prise par le deuxième signal de comparaison.

Le moyen de transformation (28), conforme à la première ou la troisième variante de réalisation, peut être modifié pour que son moyen de renvoi (29) à bielles et/ou à câbles soit articulé à la deuxième partie (15, 17) du bras (7, 8) et au châssis (2).

Le moyen de transformation (28), conforme à la deuxième variante de réalisation, peut être modifié pour que le deuxième moyen de mesure (37) fournisse un deuxième signal image d'une deuxième grandeur physique d'entrée, représentative d'une position de la deuxième partie (15) du bras (7) par rapport au châssis (2). La deuxième grandeur physique d'entrée peut ainsi être un deuxième angle que forme la deuxième partie (15) du bras (7) par rapport au châssis (2). Le deuxième moyen de mesure (37) peut aussi comporter un deuxième capteur de distance, par exemple disposé entre les première et deuxième parties (13 et 15) du bras (7). La deuxième grandeur physique d'entrée est alors une deuxième distance mesurée entre deux références respectives de la première partie (13) du bras (7) et de la deuxième partie (15) du bras (7).

La machine (1) selon l'invention peut faire appel, en lieu et place de vérins hydrauliques, à des actionneurs électriques associés à des moyens interrupteurs électriques remplaçant la ou les vannes ou électrovannes.

Bien entendu, l'invention n'est pas limitée aux formes et variantes de réalisation décrites et représentées sur les figures annexées. Des modifications restent possibles dans la limite définie par les revendications.

## Revendications

1. Machine (1) agricole pour la récolte de fourrage, déplaçable dans une direction d'avancement (A) et comportant un châssis (2) auquel est articulé au moins un bras (7, 8) portant au moins un outil de travail (9), ce bras (7, 8) comportant au moins une première partie (13) articulée directement ou indirectement au châssis (2), et une deuxième partie (15, 17) reliée de manière mobile à la première partie (13) et portant l'outil de travail (9), la machine (1) comportant également au moins un premier dispositif d'actionnement (19) relié à la première partie (13) et un deuxième dispositif d'actionnement (21) relié à la deuxième partie (15, 17), au moins l'un de ces premier et deuxième dispositifs d'actionnement (19 et 21) étant piloté pour régler une distance (d) mesurée transversalement à la direction d'avancement (A) et de laquelle l'outil de travail (9) s'étend latéralement par rapport au châssis (2), entre une valeur minimale et une valeur maximale, au moins l'autre de ces premier et deuxième dispositifs d'actionnement (19 et 21) étant piloté pour déplacer verticalement l'outil de travail (9) entre au moins une position de travail et au moins une position relevée dans laquelle l'outil de travail (9) s'étend à une certaine hauteur (h) au-dessus du sol, la machine (1) comportant des moyens d'asservissement (27) en position de l'un au moins de ces premier et deuxième dispositifs d'actionnement (19 et 21) à une consigne de réglage qui détermine une hauteur cible de l'outil de travail (9) par rapport au sol, ***caractérisée en ce que*** les moyens d'asservissement (27) sont configurés pour relever l'outil de travail (9) à une hauteur (h) du sol sensiblement égale à cette hauteur cible, depuis au moins deux positions transversales de travail de l'outil de travail (9) situées à une distance (d) du châssis (2) comprise entre les valeurs minimale et maximale.

2. Machine selon la revendication 1, ***caractérisée en ce que*** les moyens d'asservissement (27) sont configurés pour relever l'outil de travail (9) à une hauteur (h) du sol sensiblement égale à cette hauteur cible, depuis toute position transversale de travail de l'outil de travail (9) située à une distance (d) du châssis (2) comprise entre les valeurs minimale et maximale.

3. Machine selon la revendication 1 ou 2, ***caractérisée en ce que*** les moyens d'asservissement (27) comportent un moyen de transformation (28) qui délivre, à partir d'au moins une grandeur physique d'entrée représentative d'une position transversale de travail de l'outil de travail (9) située à une distance (d) du châssis (2) comprise entre les valeurs minimale et maximale, au moins une grandeur de commande utilisée pour le pilotage de l'un au moins des premier et deuxième dispositifs d'actionnement (19 et 21).

4. Machine selon la revendication 3, ***caractérisée en ce que*** la grandeur physique d'entrée est représentative d'une position de la deuxième partie (15, 17) du bras (7, 8) par rapport à la première partie (13) du bras (7, 8) ou par rapport au châssis (2), ou bien d'une position de la première partie (13) du bras (7, 8) par rapport au châssis (2), ou bien une grandeur physique d'entrée est représentative d'une position de la deuxième partie (15, 17) du bras (7, 8) par rapport à la première partie (13) du bras (7, 8) ou par rapport au châssis (2) tandis qu'une autre grandeur physique d'entrée est représentative d'une position de la première partie (13) du bras (7, 8) par rapport au châssis (2).

5. Machine selon la revendication 3 ou 4, ***caractérisée en ce que*** la grandeur de commande est délivrée à un organe de commande (35, 41) piloté à l'ouverture et à la fermeture et relié au premier ou au deuxième dispositif d'actionnement (19, 21), et que l'organe de commande (35, 41) autorise un flux de puissance vers le premier ou le deuxième dispositif d'actionnement (19, 21) tant que la valeur de la grandeur de commande n'a pas atteint une valeur cible.

6. Machine selon la revendication 3 ou 4, ***caractérisée en ce que*** chaque grandeur de commande est délivrée à un organe de commande (35, 41) respectif piloté à l'ouverture et à la fermeture et relié au premier respectivement au deuxième dispositif d'actionnement (19, 21), et que chaque organe de commande (35, 41) autorise un flux de puissance vers le premier respectivement le deuxième dispositif d'actionnement (19, 21) tant que la valeur de la grandeur de commande correspondante n'a pas atteint une valeur cible correspondante.

7. Machine selon la revendication 5 ou 6, ***caractérisée en ce qu'***une relation lie la / les valeurs cible à la / aux valeur(s) prise(s) par la / les grandeur(s) physique(s) d'entrée, à la consigne de réglage, à des paramètres dimensionnels du bras (7, 8) et/ou du moyen de transformation (28) et à des paramètres de localisation de la première partie (13) du bras (7, 8) sur le châssis (2).

8. Machine selon l'une quelconque des revendications 1 à 7, ***caractérisée en ce que*** les moyens d'asservissement (27) comportent un moyen de réglage permettant d'ajuster la consigne de réglage.

9. Machine selon l'une quelconque des revendications 3 à 8, ***caractérisée en ce que*** le moyen de transformation (28) comporte un moyen de renvoi (29) à bielles et/ou à câbles articulé à la deuxième partie (15, 17) du bras (7, 8) d'une part, et à la première partie (13) du bras (7, 8) ou au châssis (2) d'autre part.

10. Machine selon la revendication 9, ***caractérisée en ce que*** le moyen de renvoi (29) agit sur un actionneur mécanique (34) dont une position est utilisée comme grandeur de commande d'un (de l') organe de commande (35) formé par une vanne reliée au premier ou au deuxième dispositif d'actionnement (19, 21).

11. Machine selon la revendication 8, ***caractérisée en ce que*** le moyen de réglage permet de décaler l'actionneur mécanique (34) en position par rapport au bras (7, 8) et/ou par rapport à l'organe de commande (35).

12. Machine selon la revendication 3, ***caractérisée en ce que*** le moyen de transformation (28) comporte un premier moyen de mesure (36) fournissant un premier signal image d'une première grandeur physique d'entrée représentative d'une position de la première partie (13) du bras (7, 8) par rapport au châssis (2), ainsi qu'un deuxième moyen de mesure (37) fournissant un deuxième signal image d'une deuxième grandeur physique d'entrée représentative d'une position de la deuxième partie (15, 17) du bras (7, 8) par rapport à la première partie (13) du bras (7, 8) ou par rapport au châssis (2).

13. Machine selon la revendication 12, ***caractérisée en ce que*** le moyen de transformation (28) comporte un calculateur (40) qui mémorise la consigne de réglage, reçoit en temps réel les premier et deuxième signaux et délivre en temps réel la grandeur de commande pour le pilotage de l'un au moins des premier et deuxième dispositifs d'actionnement (19 et 21).

14. Machine selon la revendication 13, ***caractérisée en ce que*** le calculateur (40) stocke une loi faisant intervenir la consigne de réglage, les valeurs prises en temps réel par les premier et deuxième signaux, des paramètres dimensionnels du bras (7, 8) ainsi que des paramètres de localisation de la première partie (13) du bras (7, 8) sur le châssis (2).

15. Machine selon la revendication 14, ***caractérisée en ce que*** le calculateur (40) détermine, sur la base de la loi stockée et de la consigne de réglage, une première valeur cible pour le premier signal et/ou une deuxième valeur cible pour le deuxième signal.

16. Machine selon la revendication 15, ***caractérisée en ce que*** le calculateur (40) délivre en temps réel la grandeur de commande à l'organe de commande (41), comporte un premier comparateur délivrant un premier signal de comparaison fonction de l'écart entre la première valeur cible et la valeur prise par le premier signal, et/ou comporte un deuxième comparateur délivrant un deuxième signal de comparaison fonction de l'écart entre la deuxième valeur cible et la valeur prise par le deuxième signal, et détermine la valeur de la grandeur de commande en fonction de la valeur prise par le premier signal de comparaison et/ou de la valeur prise par le deuxième signal de comparaison.

17. Machine selon la revendication 8, ***caractérisée en ce que*** le moyen de réglage comporte un terminal de commande depuis lequel l'utilisateur peut régler la consigne de réglage.

18. Machine selon l'une quelconque des revendications 1 à 17, ***caractérisée en ce que*** la première partie (13) du bras (7, 8) peut, au moyen du premier dispositif d'actionnement (19), pivoter par rapport au châssis (2) dans un plan transversal à la direction d'avancement (A).

19. Machine selon l'une quelconque des revendications 1 à 18, ***caractérisée en ce que*** la deuxième partie (15) du bras (7) peut, au moyen du deuxième dispositif d'actionnement (21), pivoter par rapport à la première partie (13) du bras (7).

20. Machine selon l'une quelconque des revendications 1 à 18, ***caractérisée en ce qu***'une liaison coulissante (18) relie la deuxième partie (17) du bras (8) à la première partie (13) du bras (8) qui sont déplacées l'une par rapport à l'autre au moyen du deuxième dispositif d'actionnement (21).

21. Machine selon la revendication 12, ***caractérisée en ce que*** le premier moyen de mesure (36) comporte un premier capteur d'angle (38), et que la première grandeur physique d'entrée est un premier angle (α1) mesuré entre la première partie (13) et le châssis (2).

22. Machine selon la revendication 12, ***caractérisée en ce que*** le deuxième moyen de mesure (37) comporte un deuxième capteur d'angle (39), et que la deuxième grandeur physique d'entrée est un deuxième angle (α2) mesuré entre la deuxième partie (15) du bras (7) et la première partie (13) du bras (7) ou bien entre la deuxième partie (15) du bras (7) et le châssis (2).

23. Machine selon la revendication 12, ***caractérisée en ce que*** le deuxième moyen de mesure (37) comporte un deuxième capteur de distance, et que la deuxième grandeur physique d'entrée est une deuxième distance mesurée entre deux références respectives de la première partie (13) du bras (7, 8) et de la deuxième partie (15, 17) du bras (7, 8).

## Patentansprüche

1. Landwirtschaftliche Maschine (1) für die Futterernte, die in eine Vorschubrichtung (A) verschiebbar ist und ein Gestell (2) umfasst, an das mindestens ein Arm (7, 8) angelenkt ist, der mindestens ein Arbeitswerkzeug (9) trägt, wobei dieser Arm (7, 8) mindestens einen ersten Teil (13) umfasst, der direkt oder indirekt an das Gestell (2) angelenkt ist, und einen zweiten Teil (15, 17), der mit dem ersten Teil (13) beweglich verbunden ist und das Arbeitswerkzeug (9) trägt, wobei die Maschine (1) ebenfalls mindestens eine erste Betätigungsvorrichtung (19) umfasst, die mit dem ersten Teil (13) verbunden ist, und eine zweite Betätigungsvorrichtung (21), die mit dem zweiten Teil (15, 17) verbunden ist, wobei mindestens eine dieser ersten und zweiten Betätigungsvorrichtungen (19 und 21) gesteuert wird, um einen Abstand (d) einzustellen, der quer zur Vorschubrichtung (A) gemessen wird und in dem sich das Arbeitswerkzeug (9) seitlich in Bezug auf das Gestell (2) zwischen einem Minimal- und einem Maximalwert erstreckt, wobei mindestens die andere dieser ersten und zweiten Betätigungsvorrichtungen (19 und 21) gesteuert wird, um das Arbeitswerkzeug (9) zwischen mindestens einer Arbeitsstellung und mindestens einer angehobenen Stellung vertikal zu verschieben, in der sich das Arbeitswerkzeug (9) in einer bestimmten Höhe (h) über dem Boden erstreckt, wobei die Maschine (1) Steuermittel (27) für die Stellung von mindestens einer dieser ersten und zweiten Betätigungsvorrichtungen (19 und 21) auf einem Einstellwert umfasst, der eine Zielhöhe des Arbeitswerkzeugs (9) in Bezug auf den Boden bestimmt, ***dadurch gekennzeichnet, dass*** die Steuermittel (27) ausgelegt sind, um das Arbeitswerkzeug (9) auf eine Höhe (h) vom Boden anzuheben, die im Wesentlichen dieser Zielhöhe gleich ist, ausgehend von mindestens zwei quer verlaufenden Arbeitsstellungen des Arbeitswerkzeugs (9), die sich in einem Abstand (d) vom Gestell (2) befinden, der zwischen dem Minimal- und dem Maximalwert liegt.

2. Maschine nach Anspruch 1, ***dadurch gekennzeichnet*, *dass*** die Steuermittel (27) ausgelegt sind, um das Arbeitswerkzeug (9) auf eine Höhe (h) vom Boden anzuheben, die im Wesentlichen dieser Zielhöhe gleich ist, ausgehend von jeder quer verlaufenden Arbeitsstellung des Arbeitswerkzeugs (9), die sich in einem Abstand (d) vom Gestell (2) befindet, der zwischen dem Minimal- und dem Maximalwert liegt.

3. Maschine nach Anspruch 1 oder 2, ***dadurch gekennzeichnet*, *dass*** die Steuermittel (27) ein Verarbeitungsmittel (28) umfassen, das, ausgehend von mindestens einer Eingangsphysikgröße, die bezeichnend ist für eine quer verlaufende Arbeitsstellung des Arbeitswerkzeugs (9), die in einem Abstand (d) vom Gestell (2) angeordnet ist, der zwischen dem Minimal- und dem Maximalwert liegt, mindestens eine Steuergröße ausgibt, die zum Steuern von mindestens einer der ersten und zweiten Betätigungsvorrichtungen (19 und 21) verwendet wird.

4. Maschine nach Anspruch 3, ***dadurch gekennzeichnet*, *dass*** die Eingangsphysikgröße bezeichnend ist für eine Stellung des zweiten Teils (15, 17) des Arms (7, 8) in Bezug auf den ersten Teil (13) des Arms (7, 8) oder in Bezug auf das Gestell (2), oder auch für eine Stellung des ersten Teils (13) des Arms (7, 8) in Bezug auf das Gestell (2), oder eine Eingangsphysikgröße bezeichnend ist für eine Stellung des zweiten Teils (15, 17) des Arms (7, 8) in Bezug auf den ersten Teil (13) des Arms (7, 8) oder in Bezug auf das Gestell (2), während eine andere Eingangsphysikgröße bezeichnend ist für eine Stellung des ersten Teils (13) des Arms (7, 8) in Bezug auf das Gestell (2).

5. Maschine nach Anspruch 3 oder 4, ***dadurch gekennzeichnet*, *dass*** die Steuergröße an ein Steuerungselement (35, 41) ausgegeben wird, das zum Öffnen und zum Schließen gesteuert wird und mit der ersten oder zweiten Betätigungsvorrichtung (19, 21) verbunden ist, und dass das Steuerungselement (35, 41) einen Kraftfluss zur ersten oder zweiten Betätigungsvorrichtung (19, 21) freigibt, solange der Wert der Steuergröße keinen Zielwert erreicht hat.

6. Maschine nach Anspruch 3 oder 4, ***dadurch gekennzeichnet*, *dass*** jede Steuergröße an ein jeweiliges Steuerungselement (35, 41) ausgegeben wird, das zum Öffnen und zum Schließen gesteuert wird und mit der ersten beziehungsweise zweiten Betätigungsvorrichtung (19, 21) verbunden ist, und dass jedes Steuerungselement (35, 41) einen Kraftfluss zur ersten beziehungsweise zweiten Betätigungsvorrichtung (19, 21) freigibt, solange der Wert der entsprechenden Steuergröße keinen entsprechenden Zielwert erreicht hat.

7. Maschine nach Anspruch 5 oder 6, ***dadurch gekennzeichnet, dass*** eine Relation den/die Zielwert/e mit dem/den von der/den Eingangsphysikgröße/n angenommenen Wert/en, mit dem Einstellwert, mit Abmessungsparametern des Arms (7, 8) und/oder des Verarbeitungsmittels (28) und mit Parametern zur Lokalisierung des ersten Teils (13) des Arms (7, 8) am Gestell (2) verbindet.

8. Maschine nach irgend einem der Ansprüche 1 bis 7, ***dadurch gekennzeichnet*, *dass*** die Steuermittel (27) ein Einstellmittel umfassen, welches das Anpassen des Einstellwerts ermöglicht.

9. Maschine nach irgend einem der Ansprüche 3 bis 8, ***dadurch gekennzeichnet*, *dass*** das Verarbeitungsmittel (28) ein Übertragungsmittel (29) mit Stangen und/oder Seilen umfasst, das einerseits am zweiten Teil (15, 17) des Arms (7, 8) und andererseits am ersten Teil (13) des Arms (7, 8) oder am Gestell (2) angelenkt ist.

10. Maschine nach Anspruch 9, ***dadurch gekennzeichnet*, *dass*** das Übertragungsmittel (29) auf ein mechanisches Betätigungselement (34) einwirkt, von dem eine Stellung als Steuergröße eines (des) Steuerungselements (35) verwendet wird, das von einem Ventil gebildet wird, das mit der ersten oder zweiten Betätigungsvorrichtung (19, 21) verbunden ist.

11. Maschine nach Anspruch 8, ***dadurch gekennzeichnet*, *dass*** das Einstellmittel einen Stellungsversatz des mechanischen Betätigungselements (34) in Bezug auf den Arm (7, 8) und/oder in Bezug auf das Steuerungselement (35) ermöglicht.

12. Maschine nach Anspruch 3, ***dadurch gekennzeichnet*, *dass*** das Verarbeitungsmittel (28) ein erstes Messmittel (36) umfasst, das ein erstes Signal liefert, das von einer ersten Eingangsphysikgröße abhängig ist, die bezeichnend ist für eine Stellung des ersten Teils (13) des Arms (7, 8) in Bezug auf das Gestell (2), sowie ein zweites Messmittel (37), das ein zweites Signal liefert, das von einer zweiten Eingangsphysikgröße abhängig ist, die bezeichnend ist für eine Stellung des zweiten Teils (15, 17) des Arms (7, 8) in Bezug auf den ersten Teil (13) des Arms (7, 8) oder in Bezug auf das Gestell (2).

13. Maschine nach Anspruch 12, ***dadurch gekennzeichnet*, *dass*** das Verarbeitungsmittel (28) einen Kalkulator (40) umfasst, der den Einstellwert speichert, in Echtzeit die ersten und zweiten Signale empfängt und in Echtzeit die Steuergröße zum Steuern von mindestens einer der ersten und zweiten Betätigungsvorrichtungen (19 und 21) ausgibt.

14. Maschine nach Anspruch 13, ***dadurch gekennzeichnet*, *dass*** der Kalkulator (40) eine Regel speichert, die den Einstellwert, die in Echtzeit von den ersten und zweiten Signalen angenommenen Werte, Abmessungsparameter des Arms (7, 8) sowie Parameter zur Lokalisierung des ersten Teils (13) des Arms (7, 8) am Gestell (2) einsetzt.

15. Maschine nach Anspruch 14, ***dadurch gekennzeichnet*, *dass*** der Kalkulator (40), auf Basis der gespeicherten Regel und des Einstellwerts, einen ersten Zielwert für das erste Signal und/oder einen zweiten Zielwert für das zweite Signal bestimmt.

16. Maschine nach Anspruch 15, ***dadurch gekennzeichnet*, *dass*** der Kalkulator (40) in Echtzeit die Steuergröße an das Steuerungselement (41) ausgibt, einen ersten Vergleicher umfasst, der ein erstes Vergleichssignal in Abhängigkeit vom Unterschied zwischen dem ersten Zielwert und dem vom ersten Signal angenommenen Wert ausgibt, und/oder einen zweiten Vergleicher umfasst, der ein zweites Vergleichssignal in Abhängigkeit vom Unterschied zwischen dem zweiten Zielwert und dem vom zweiten Signal angenommenen Wert ausgibt, und den Wert der Steuergröße in Abhängigkeit von dem vom ersten Vergleichssignal angenommenen Wert und/oder dem vom zweiten Vergleichssignal angenommenen Wert bestimmt.

17. Maschine nach Anspruch 8, ***dadurch gekennzeichnet*, *dass*** das Einstellmittel ein Betriebsterminal umfasst, von dem aus der Benutzer den Einstellwert einstellen kann.

18. Maschine nach irgend einem der Ansprüche 1 bis 17, ***dadurch gekennzeichnet*, *dass*** der erste Teil (13) des Arms (7, 8) mittels der ersten Betätigungsvorrichtung (19) in Bezug auf das Gestell (2) in einer Ebene schwenken kann, die quer zur Vorschubrichtung (A) verläuft.

19. Maschine nach irgend einem der Ansprüche 1 bis 18, ***dadurch gekennzeichnet*, *dass*** der zweite Teil (15) des Arms (7) mittels der zweiten Betätigungsvorrichtung (21) in Bezug auf den ersten Teil (13) des Arms (7) schwenken kann.

20. Maschine nach irgend einem der Ansprüche 1 bis 18, ***dadurch gekennzeichnet*, *dass*** eine Gleitverbindung (18) den zweiten Teil (17) des Arms (8) mit dem ersten Teil (13) des Arms (8) verbindet, die mittels der zweiten Betätigungsvorrichtung (21) zueinander verschoben werden.

21. Maschine nach Anspruch 12, ***dadurch gekennzeichnet*, *dass*** das erste Messmittel (36) einen ersten Winkelsensor (38) umfasst und dass die erste Eingangsphysikgröße ein erster Winkel (α1) ist, der zwischen dem ersten Teil (13) und dem Gestell (2) gemessen wird.

22. Maschine nach Anspruch 12, ***dadurch gekennzeichnet*, *dass*** das zweite Messmittel (37) einen zweiten Winkelsensor (39) umfasst und dass die zweite Eingangsphysikgröße ein zweiter Winkel (α2) ist, der zwischen dem zweiten Teil (15) des Arms (7) und dem ersten Teil (13) des Arms (7) oder zwischen dem zweiten Teil (15) des Arms (7) und dem Gestell (2) gemessen wird.

23. Maschine nach Anspruch 12, ***dadurch gekennzeichnet*, *dass*** das zweite Messmittel (37) einen zweiten Abstandssensor umfasst und dass die zweite Eingangsphysikgröße ein zweiter Abstand ist, der zwischen zwei entsprechenden Bezugswerten des ersten Teils (13) des Arms (7, 8) und des zweiten Teils (15, 17) des Arms (7, 8) gemessen wird.

## Claims

1. Agricultural machine (1) for harvesting forage, displaceable in a direction of advance (A) and comprising a chassis (2) to which at least one arm (7, 8) carrying at least one work tool (9) is articulated, this arm (7, 8) comprising at least a first part (13) articulated directly or indirectly to the chassis (2) and a second part (15, 17) connected in a mobile manner to the first part (13) and carrying the work tool (9), the machine (1) also comprising at least a first actuating device (19) connected to the first part (13) and a second actuating device (21) connected to the second part (15, 17), at least one of these first and second actuating devices (19 and 21) being controlled to adjust a distance (d) measured transversely to the direction of advance (A) and from which the work tool (9) extends laterally relative to the chassis (2), between a minimum value and a maximum value, at least the other of these first and second actuating devices (19 and 21) being controlled to displace the work tool (9) vertically between at least a work position and at least a raised position in which the work tool (9) extends at a certain height (h) above the ground, the machine (1) comprising servo-control means (27) for positioning at least one of these first and second actuating devices (19 and 21) in accordance with a control setpoint which determines a target height of the work tool (9) relative to the ground, ***characterized in* that** the servo-control means (27) are configured to raise the work tool (9) to a height (h) above the ground substantially equal to this target height, from at least two transverse work positions of the work tool (9) located at a distance (d) from the chassis (2) between the minimum and maximum values.

2. Machine according to claim 1, ***characterized in* that** the servo-control means (27) are configured to raise the work tool (9) to a height (h) above the ground substantially equal to this target height, from any transverse work position of the work tool (9) located at a distance (d) from the chassis (2) between the minimum and maximum values.

3. Machine according to claim 1 or 2, ***characterized in* that** the servo-control means (27) comprise a conversion means (28) which delivers, on the basis of at least one physical input variable representative of a transverse work position of the work tool (9) located at a distance (d) from the chassis (2) between the minimum and maximum values, at least one control variable used for controlling at least one of the first and second actuating devices (19 and 21).

4. Machine according to claim 3, ***characterized in* that** the physical input variable is representative of a position of the second part (15, 17) of the arm (7, 8) relative to the first part (13) of the arm (7, 8) or relative to the chassis (2), or of a position of the first part (13) of the arm (7, 8) relative to the chassis (2), or one physical input variable is representative of a position of the second part (15, 17) of the arm (7, 8) relative to the first part (13) of the arm (7, 8) or relative to the chassis (2), whilst another physical input variable is representative of a position of the first part (13) of the arm (7, 8) relative to the chassis (2).

5. Machine according to claim 3 or 4, ***characterized in* that** the control variable is delivered to a control element (35, 41) controlled for opening and closing and connected to the first or the second actuating device (19, 21), and the control element (35, 41) allows a power flow towards the first or the second actuating device (19, 21) as long as the value of the control variable has not reached a target value.

6. Machine according to claim 3 or 4, ***characterized in* that** each control variable is delivered to a respective control element (35, 41) controlled for opening and closing and connected to the first, respectively the second actuating device (19, 21), and each control element (35, 41) allows a power flow towards the first, respectively the second actuating device (19, 21) as long as the value of the corresponding control variable has not reached a corresponding target value.

7. Machine according to claim 5 or 6, ***characterized in* that** a relationship links the target value(s) to the value(s) taken by the physical input variable(s), to the control setpoint, to dimensional parameters of the arm (7, 8) and/or of the conversion means (28) and to location parameters of the first part (13) of the arm (7, 8) on the chassis (2).

8. Machine according to any one of claims 1 to 7, ***characterized in* that** the servo-control means (27) comprise an adjustment means making it possible to adjust the control setpoint.

9. Machine according to any one of claims 3 to 8, ***characterized in* that** the conversion means (28) comprise a rod and/or cable transmission means (29) articulated to the second part (15, 17) of the arm (7, 8) on the one hand and to the first part (13) of the arm (7, 8) or to the chassis (2) on the other hand.

10. Machine according to claim 9, ***characterized in* that** the transmission means (29) acts on a mechanical actuator (34), whereof a position is used as control variable of a (the) control element (35) constituted by a valve connected to the first or the second actuating device (19, 21).

11. Machine according to claim 8, ***characterized in* that** the adjustment means makes it possible to offset the mechanical actuator (34) in position relative to the arm (7, 8) and/or relative to the control element (35).

12. Machine according to claim 3, ***characterized in* that** the conversion means (28) comprises a first measuring means (36) supplying a first signal image of a first physical input variable representative of a position of the first part (13) of the arm (7, 8) relative to the chassis (2), as well as a second measuring means (37) supplying a second signal image of a second physical input variable representative of a position of the second part (15, 17) of the arm (7, 8) relative to the first part (13) of the arm (7, 8) or relative to the chassis (2).

13. Machine according to claim 12, ***characterized in* that** the conversion means (28) comprises a computer (40) which memorises the control setpoint, receives the first and second signals in real time and delivers the control variable in real time in order to control at least one of the first and second actuating devices (19 and 21).

14. Machine according to claim 13, ***characterized in* that** the computer (40) stores a law involving the control setpoint, the values taken in real time by the first and second signals, dimensional parameters of the arm (7, 8) as well as location parameters of the first part (13) of the arm (7, 8) on the chassis (2).

15. Machine according to claim 14, ***characterized in* that** the computer (40) determines, on the basis of the stored law and the control setpoint, a first target value for the first signal and/or a second target value for the second signal.

16. Machine according to claim 15, ***characterized in* that** the computer (40) delivers the control variable in real time to the control element (41), comprises a first comparator delivering a first comparison signal depending on the divergence between the first target value and the value taken by the first signal, and/or comprises a second comparator delivering a second comparison signal depending on the divergence between the second target value and the value taken by the second signal, and determines the value of the control variable depending on the value taken by the first comparison signal and/or the value taken by the second comparison signal.

17. Machine according to claim 8, ***characterized in* that** the adjustment means comprises a control terminal from which the user can adjust the control setpoint.

18. Machine according to any one of claims 1 to 17, ***characterized in* that** the first part (13) of the arm (7, 8) can, by means of the first actuating device (19), swivel relative to the chassis (2) in a plane transverse to the direction of advance (A).

19. Machine according to any one of claims 1 to 18, ***characterized in* that** the second part (15) of the arm (7) can, by means of the second actuating device (21), swivel relative to the first part (13) of the arm (7).

20. Machine according to any one of claims 1 to 18, ***characterized in* that** a sliding linkage (18) connects the second part (17) of the arm (8) to the first part (13) of the arm (8) which are displaced the one with respect to the other by means of the second actuating device (21).

21. Machine according to claim 12, ***characterized in* that** the first measuring means (36) comprises a first angle sensor (38) and that the first physical input variable is a first angle (α1) measured between the first part (13) and the chassis (2).

22. Machine according to claim 12, ***characterized in* that** the second measuring means (37) comprises a second angle sensor (39) and that the second physical input variable is a second angle (α2) measured between the second part (15) of the arm (7) and the first part (13) of the arm (7) or between the second part (15) of the arm (7) and the chassis (2).

23. Machine according to claim 12, ***characterized in* that** the second measuring means (37) comprises a second distance sensor and that the second physical input variable is a second distance measured between two respective references of the first part (13) of the arm (7, 8) and the second part (15, 17) of the arm 7, 8).
